# FASCICULE DE BREVET EUROPEEN

(11) **EP 0 650 280 B1**
(45) Date de publication et mention de la délivrance du brevet: **18.07.2001**
(21) Numéro de dépôt: 94402336.5
(22) Date de dépôt: 18.10.1994
(51) Int. Cl.: H04L 12/42, H04L 12/437

(54) **Procédé de diffusion de données à train de données**
Datenübertragungsverfahren mittels eines Datenstromes
Data transmission method using a datastream

(30) Priorité: 22.10.1993 FR 9312660
(43) Date de publication de la demande: 26.04.1995
(73) Titulaire: CEGELEC, 92300 Levallois-Perret (FR)
(72) Inventeur: Eychenne, Yves, F-91470 Limours (FR); Simatic, Michel, F-91000 Evry (FR)
(74) Mandataire: Gosse, Michel

(56) Documents cités:
- EP-A- 0 280 231
- IBM TECHNICAL DISCLOSURE BULLETIN, vol.19, no.1, Juin 1976, NEW YORK US pages 146 - 151 R. ABRAHAM ET AL. 'DATA LOOP ARCHITECTURE USING TRANSMIT-RECEIVE MESSAGE PAIRS'

## Description

L'invention porte sur un procédé de transmission de données pour un ensemble de noeuds de traitement de données interconnectés par un réseau de communication en vue de diffuser les données d'un noeud vers les autres noeuds en faisant circuler sur le réseau un train de telles données selon un circuit bouclé passant successivement par lesdits noeuds de traitement de données de telle manière que les noeuds récupèrent, éliminent et inscrivent à tour de rôle des données dans le train, chaque noeud ayant un prédécesseur et un successeur sur le circuit et étant apte à détecter un état défaillant de son successeur ou de son prédécesseur.

Un tel procédé est connu du document "IBM Technical Disclosure Bulletin", Vol. 33 - N°. 9 - Février 1991, "ASYNCHRONOUS ATOMIC BROADCAST", page 115-116.

Il est destiné en premier lieu à la diffusion fiable et ordonnée de données partagées entre des modules répliqués d'un système de traitement de données, chaque module constituant un noeud de traitement de telles données.

Dans le procédé connu, chaque noeud connecté au réseau de communication, qui reçoit un train de données, récupère les données contenues dans le train dans l'ordre où elles ont été insérées dans celui-ci par les autres noeuds au dernier tour du train sur le circuit. Ce noeud forme ensuite un nouveau train de données en éliminant du train de données, les données qu'il avait insérées dans le train au tour précédent sur le circuit, et insère en queue du train des nouvelles données. Puis le noeud envoie sur le réseau le nouveau train pour diffusion vers les autres noeuds pour un nouveau tour du train sur le circuit. Il est à noter que le train peut circuler à vide quand aucun noeud n'a de données à diffuser.

Dans un tel système de traitement de données, un ou plusieurs noeuds sont sujets à des dysfonctionnements ou défaillances entraînant leur déconnexion du réseau. Il est essentiel d'assurer néanmoins le fonctionnement du système avec les noeuds restant valides en mettant en oeuvre une procédure de récupération de fautes, notamment lorsque le train de données est arrêté dans le noeud défaillant.

Le but de l'invention est de proposer une solution simple à ce problème.

Du document «IBM DISCLOSURE BULLETIN», Vol.19, N°1, Juin 1976, New York, US, pages 146-151, R. Abraham et Al., «DATA LOOP ARCHITECTURE USING TRANSMIT - RECEIVE MESSAGE PAIRS», on connaît un procédé de transmission de données entre des noeuds d'un réseau suivant un circuit en boucle qui fonctionne en diffusion. Dans ce procédé connu, un des noeuds contrôle les autres et met en oeuvre une routine de récupération de fautes en cas de défaillance d'un des autres noeuds connectés au réseau en exploitant un comptage des messages qu'il envoie et qu'il reçoit. Ce procédé présente l'inconvénient que la routine de récupération de fautes n'est pas distribuée sur l'ensemble des noeuds connectés au réseau.

Dans le procédé selon l'invention, tel que défini par la revendication 1, il est prévu au niveau de chaque noeud une procédure de détection d'un état défaillant ou non défaillant du noeud précédant le noeud considéré dans le circuit du train. La procédure de récupération de fautes est répartie au niveau de chaque noeud restant valide. En cas de récupérations- de fautes, les trains de données devenus obsolètes, car déjà présents en mémoire interne de certains des noeuds connectés au réseau, sont éliminés du circuit par ces noeuds restant valides. Lorsqu'un noeud devient défaillant, le prédécesseur valide du noeud défaillant envoie sur le réseau le dernier train de données qu'il a enregistré en mémoire interne de manière que la diffusion fiable et ordonnée des données est reprise rapidement.

L'invention est maintenant décrite en détail en référence aux dessins.

La figure 1 illustre la marche du train de données avec trois noeuds.

Les figures 2 à 4 illustrent la marche du train de données en cas de défaillance d'un des noeuds de la figure 1.

La figure 5 illustre le processus de récupération de fautes mis en oeuvre par les noeuds restant valides.

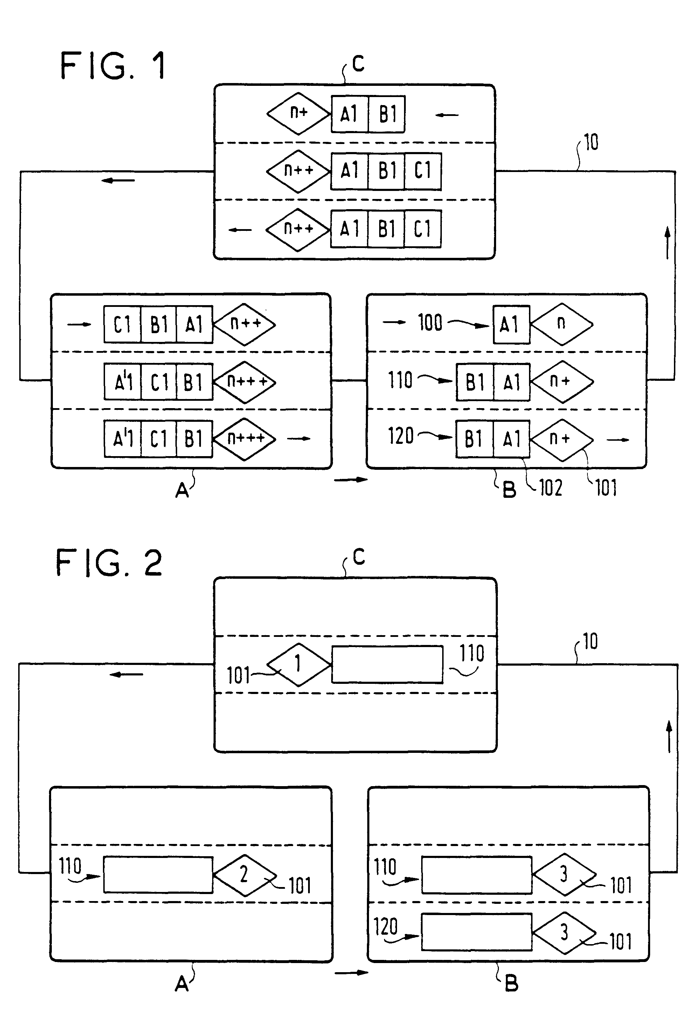

Sur la figure 1, les noeuds A,B,C sont interconnectés, point à point, par un réseau de communication 10, par exemple le système "Ethernet" (ou toute implémentation de la norme ISO 802.3) sous contrôle de la couche de transport "TCP" (Transport Connection protocol).

Ces noeuds sont des modules répliqués d'un système complexe de traitement de données ayant une architecture redondante. Dans le cas présent, les modules peuvent résider dans des processeurs différents interconnectés au réseau.

La couche de transport "TCP" est fiable dans le sens où un noeud envoie une donnée vers un autre noeud à travers le réseau de manière fiable et suivant un ordre chronologique.

Chaque noeud diffuse ses propres données vers les autres noeuds par l'intermédiaire d'un train de données qui circule sur le réseau de noeud en noeud selon un circuit bouclé dont le sens est montré par les flèches. Ce circuit passe successivement par les noeuds A,B,C,A... et ainsi de suite. Il est constitué au fur et à mesure de l'insertion des noeuds dans le circuit.

Sur la figure 1, chaque noeud est représenté par un rectangle divisé en trois parties correspondant respectivement aux fonctionnalités de réception, de gestion et d'émission du train de données. Globalement, chaque noeud reçoit donc sur le réseau 10 le train de données indiqué par 100, constitue un nouveau train de données indiqué par 110, enregistre le nouveau train de données en mémoire, et envoie sur le réseau le nouveau train de données indiqué par 120.

Un train de données est constitué d'une en-tête 101 et de un ou plusieurs wagons 102.

L'en-tête 101 contient un compteur, la longueur du train (en nombre d'octets) et une table de description répertoriant les noeuds du circuit du train. Dans cette table, les noeuds portent des codes qui sont rangés selon l'ordre de passage du train dans les noeuds de sorte que chaque noeud, en consultant la table contenue dans un train de données qu'il reçoit, est apte à déterminer le noeud qui le succède ou qui le précède dans le circuit du train. Sur la figure 1, seul le compteur n est représenté dans l'en-tête 101 du train.

Chaque wagon 102 contient un code identifiant un noeud utilisateur du wagon, la longueur en octets du wagon, et des données insérées dans le wagon par le noeud utilisateur en question. Sur la figure 1, les wagons sont montrés contenant seulement une donnée A1,B1,C1,A'1. Chaque donnée est ici désignée par une lettre indicative du noeud qui l'a insérée dans le train.

La marche normale du train est maintenant décrite. Les noeuds A,B,C font partie du circuit du train, le dernier train de données envoyé sur le réseau partant du noeud A.

A ce stade, Le noeud B reçoit un train de données 100 qui a une en-tête 101 contenant le compteur n et un wagon 102 contenant la donnée A1 insérée par le noeud A.

Le noeud B récupère la donnée A1 du train 100. Il incrémente le compteur n (n+) dans l'en-tête 101 du train. La valeur de l'incrément est choisie ici à 1. Le noeud B constitue et enregistre un nouveau train 110 en mémoire comprenant une en-tête qui contient le compteur incrémenté de 1 (n+), le wagon contenant la donnée A1, et un nouveau wagon contenant la donnée B1. Le wagon contenant la donnée B1 est inséré en queue de train. Puis, le noeud B envoie sur le réseau au noeud C le train 120 identique au dernier train enregistré en mémoire (train 110). Il faut comprendre qu'à chaque tour du train, le noeud B met à jour le contenu de sa mémoire avec le dernier train de données qu'il envoie sur le réseau.

Le noeud C reçoit maintenant le train de données envoyé par le noeud B. Il récupère les données A1 et B1 dans les wagons du train. Il incrémente le compteur du train qu'il reçoit (n++). Il constitue et enregistre en mémoire un nouveau train comportant une en-tête qui contient le compteur incrémenté de 1 (n++), et trois wagons contenant respectivement et dans l'ordre les données A1,B1,C1. Il envoie ce nouveau train de données au noeud A. Pour le cas où le noeud C n'aurait pas de données à diffuser, le troisième wagon peut rester vide ou n'être pas inséré en queue de train. Il s'agit ici d'un choix de mode de réalisation.

Le noeud A reçoit maintenant le dernier train envoyé sur le réseau. Il récupère les données A1,B1,C1. Il incrémente le compteur du train (n+++). Il élimine du train le wagon contenant la donnée A1 qu'il avait insérée dans le train au tour précédent. Le noeud A constitue un nouveau train en insérant un wagon en queue de train qui contient une nouvelle donnée A'1 et enregistre ce nouveau train en mémoire. Ce nouveau train contient le nouveau compteur (n+++) et donc trois wagons contenant respectivement et dans l'ordre les données B1,C1,A'1. Le noeud A envoie ensuite le nouveau train sur le réseau.

A ce stade, chaque noeud conserve en mémoire l'état du train qu'il a envoyé sur le réseau au dernier tour du train.

Par ailleurs, chaque noeud récupère, à tour de rôle, les données diffusées par les autres noeuds dans un ordre correspondant à leur ordre d'insertion dans le train de sorte que la diffusion des données est ordonnée.

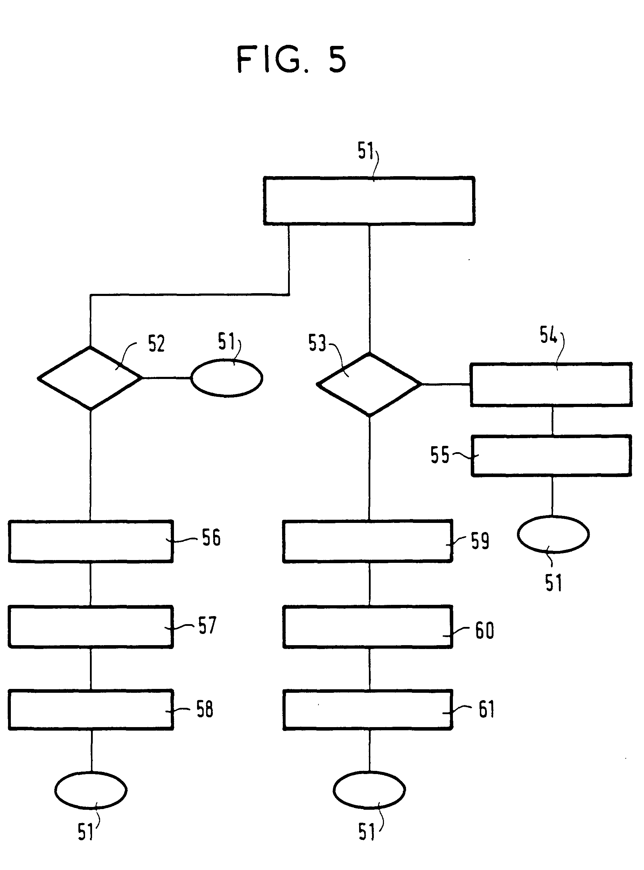

Le processus de récupération de fautes est le suivant en référence avec la figure 5.

En 51, un noeud valide se place en attente de réception d'un train 120 de données fourni par son prédécesseur.

En réponse à la réception d'un train de données, le noeud compare en 52 le compteur du train 100 reçu avec le compteur du dernier train 110 qu'il a enregistré en mémoire. Si le compteur du train reçu est plus petit que le compteur du train enregistré en mémoire, le noeud détecte que le train de données reçu est obsolète et il recommence son traitement à partir de l'étape 51. Dans le cas contraire, le noeud, dans l'étape 56, récupère les données du train, incrémente le compteur du train, insère de nouvelles données dans le train et enregistre le nouveau train en mémoire. Puis dans l'étape 57, il envoie le nouveau train sur le réseau à son successeur et revient ensuite à l'étape 51.

Durant l'attente de réception d'un train de données par un noeud valide, ce noeud valide prend en compte, le cas échéant, un état défaillant de son prédécesseur en vue de déclencher une procédure de récupération de fautes. La détection est basée sur la réception d'un premier message réseau (message d'état) renvoyé par la couche de transport lorsqu'une ou des requêtes de lecture adressées régulièrement par un noeud valide à son prédécesseur (défaillant) restent sans réponse.

La détection de la défaillance d'un noeud par la couche de transport génère le message d'état au niveau du prédécesseur et du successeur du noeud défaillant.

En 53, le prédécesseur et le successeur reçoivent ce message d'état. Chacun détermine si le lien qu'il a perdu était vers son prédécesseur ou vers son successeur, ce qui permet à ces noeuds de s'identifier comme successeur ou prédécesseur du noeud défaillant.

Si le noeud ayant reçu le message d'état est le prédécesseur du noeud défaillant, il se met en attente en 54 d'une demande de connexion du successeur du noeud défaillant.

Si le noeud ayant reçu le message d'état est le successeur du noeud défaillant, il essaie de se reconnecter au noeud défaillant pour s'assurer que ce n'est qu'une disparition temporaire du lien de communication et non pas une défaillance du noeud.

Par conséquent, dans le cas où le noeud valide détermine, en 53, qu'il est le prédécesseur du noeud défaillant, il se met en attente en 54 d'une demande de connexion "TCP" venant du successeur du noeud défaillant par l'intermédiaire de la couche de transport. Dans le cas où le noeud valide détermine, en 53, qu'il est le successeur du noeud défaillant, il entreprend d'abord une tentative de connexion au noeud défaillant. En cas d'échec, il recherche, en 59, dans la table des noeuds qu'il tient du dernier train 110 de données qu'il a enregistré en mémoire, un nouveau prédécesseur. Ce nouveau noeud prédécesseur est défini comme le premier prédécesseur valide du noeud défaillant dans le circuit du train. Il établit en 60 une connexion avec le nouveau noeud prédécesseur par l'intermédiaire de la couche de transport. La connexion, sous la forme d'un second message réseau (message de connexion), peut aboutir dans le cas où le nouveau prédécesseur est valide ou échouer dans le cas où le nouveau prédécesseur est lui même défaillant. Dans le dernier cas, le noeud valide considéré est agencé pour remonter les différents noeuds du circuit du train jusqu'à obtenir une connexion satisfaisante avec un prédécesseur valide.

En réponse à l'établissement de la connexion entre le successeur du noeud défaillant et le prédécesseur du noeud défaillant, ce dernier, en 55, envoie sur le réseau, le dernier train 110 qu'il a enregistré en mémoire puis revient à l'étape 51.

La mise à jour du circuit du train, lors de la défaillance d'un noeud, peut être implémentée de la façon suivante.

Chaque noeud est agencé, dans l'étape 56, pour contrôler l'état d'une variable booléenne interne. Dans le cas où la variable booléenne est positionnée à "vrai", le noeud met à jour la table de description du circuit du train dans le dernier train de données qu'il enregistre en mémoire par élimination du code du noeud défaillant. Les wagons contenant les données du noeud défaillant ne sont pas conservés dans le train enregistré en mémoire. Puis il positionne la variable de contrôle à "faux". Dans le cas où la variable de contrôle est positionnée à "faux", le noeud n'effectue aucun traitement supplémentaire dans l'étape 56. Il va de soi que les variables de contrôle des noeuds sont positionnées à "faux" au commencement du fonctionnement du système.

Par ailleurs, chaque noeud est agencé pour mettre à jour, dans l'étape 55, la table de description du train envoyé sur le réseau et purger ce train de données des données concernant le noeud défaillant.

Maintenant, le prédécesseur d'un noeud défaillant positionne sa variable de contrôle interne à "vrai" dans l'étape 55 après ou avant d'envoyer le dernier train de données enregistré en mémoire et mis à jour comme décrit précédemment.

De cette façon, le successeur du noeud défaillant reçoit toujours du prédécesseur du noeud défaillant un train de données ayant un circuit de train mis à jour. Par ailleurs, le train de données envoyé sur le réseau par l'un quelconque des noeuds successeurs du noeud défaillant, sera filtré une seule fois, dans l'étape 56, par le prédécesseur du noeud défaillant pour la mise à jour de la table de description du circuit du train et l'élimination des données issues du noeud défaillant.

Un exemple de fonctionnement du processus de récupération de fautes est maintenant décrit en référence aux figures 2 à 4.

Sur la figure 2, la situation du système de diffusion de données avant défaillance d'un des noeuds est la suivante. La valeur du compteur du dernier train de données enregistré par le noeud B est 2. Pour le noeud C, la valeur est 3 et pour le noeud A, la valeur est 4.

Maintenant le noeud C devient défaillant. Le dernier train de données circulant sur le circuit du train est enregistré dans le noeud A dont la valeur du compteur est la plus grande.

Les noeuds A et B reçoivent un message d'état (étape 53) par l'intermédiaire de la couche de transport et détectent donc la défaillance du noeud C.

Le noeud A recherche un nouveau prédécesseur (étape 59). Parallèlement, le noeud B se met en attente d'une connexion avec le noeud A (étape 54).

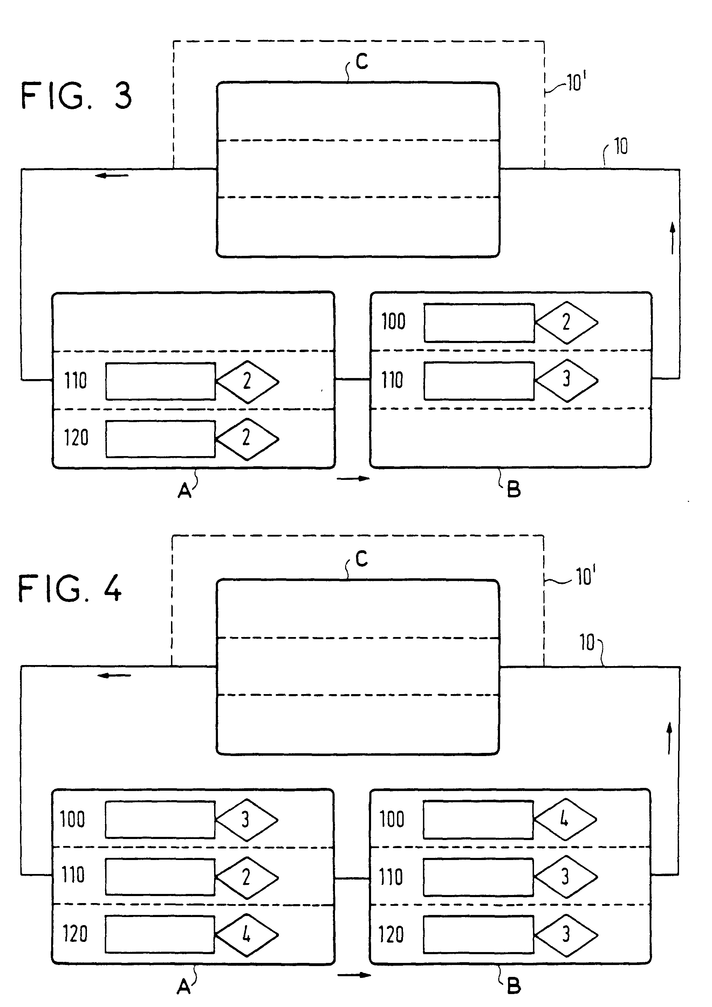

Sur la figure 3, le noeud A établit maintenant une connexion 10' avec le noeud B (étape 60). Après établissement de la connexion, le noeud B envoie sur le réseau au noeud A, son dernier train 110 enregistré en mémoire qui a été purgé des données du noeud C et ayant une table de description du circuit du train mise à jour. Sa variable booléenne de contrôle est positionnée à "vrai" (étape 55). Le noeud A reçoit le dernier train de données provenant du noeud B. Ce train est obsolète et n'est pas traité par le noeud A (étape 52) du fait de la valeur de son compteur.

Sur la figure 4, le noeud A envoie maintenant son dernier train de données enregistré en mémoire (étapes 56,57). Le noeud B prend en compte le dernier train de données envoyé par le noeud A (étape 52) du fait de la valeur de son compteur. Il récupère les données dans les wagons du train, constitue un nouveau train purgé des données du noeud C et ayant une table de description du circuit du train mise à jour du fait que la variable booléenne interne au noeud B est positionnée à "vrai" (étape 56). Le noeud B envoie ensuite sur le réseau un nouveau train de données (étape 57). La diffusion des données reprend alors normalement sans le noeud C.

Le processus de récupération de fautes selon l'invention assure que le train de données circule entre les noeuds valides dans un temps borné. Le processus de récupération de fautes est distribué entre tous les noeuds valides et est d'une mise en oeuvre simple car le mécanisme de reprise des fautes ne prend des décisions que sur des informations locales à chaque noeud.

## Revendications

1. Un procédé de transmission de données pour un ensemble de noeuds (A,B,C) de traitement de données interconnectés par un réseau de communication (10) en vue de diffuser les données (A1;B1;C1;A'1) d'un noeud vers les autres noeuds en faisant circuler sur le réseau un train (120) de telles données selon un circuit bouclé passant successivement par lesdits noeuds de traitement de données de telle manière que les noeuds récupèrent, éliminent et inscrivent à tour de rôle des données dans le train, chaque noeud ayant un prédécesseur et un successeur sur le circuit et étant apte à détecter un état défaillant de son successeur ou de son prédécesseur, caractérisé en ce que chaque noeud, avant d'inscrire dans le train des nouvelles données à diffuser, procède d'abord à l'enregistrement en mémoire interne des données du train qu'il vient de recevoir y compris la valeur d'un compteur en tête du train, incrémente la valeur de ce compteur dans sa mémoire interne et renvoie sur le réseau le train contenant les nouvelles données à diffuser avec en tête la valeur du compteur qui a été incrémentée, et lorsqu'un noeud détecte (53) un état défaillant de son prédécesseur sur le circuit, il entreprend une procédure de recherche (59) d'un nouveau prédécesseur sur le circuit et d'établissement d'un nouveau circuit du train et, avant de procéder à l'enregistrement en mémoire interne des données du train qu'il vient de recevoir de son nouveau prédécesseur, il compare (52) la valeur du compteur dans l'en-tête du train reçu avec la valeur de ce même compteur qui est enregistré en mémoire interne et renvoie (56,57) sur le réseau le train contenant lesdites nouvelles données si la valeur du compteur dans l'en-tête du train reçu est plus grande que la valeur du compteur qui est enregistré en mémoire ou se met en attente (51) de réception d'un autre train de données dans le cas contraire du résultat de la comparaison.

2. Le procédé selon la revendication 1, dans lequel lorsqu'un noeud particulier détecte (53) un état défaillant de son prédécesseur et que le successeur du noeud défaillant a établi un nouveau circuit du train, le prédécesseur du noeud défaillant renvoie (55) sur le réseau un train avec les données et la valeur du compteur qu'il a enregistrées en mémoire interne.

## Patentansprüche

1. Verfahren zur Datenübertragung für eine Anordnung von durch ein Kommunikationsnetz (10) miteinander verbundenen Datenverarbeitungsknoten (A, B, C) zum Verbreiten der Daten (A1; B1; C1; A'1) von einem Knoten zu den anderen Knoten, indem auf dem Netz ein Zug (120) solcher Daten in einer geschlossenen Schleife in Umlauf gebracht wird, die nacheinander durch die Datenverarbeitungsknoten verläuft, derart, dass die Knoten jeweils der Reihe nach Daten in dem Zug aufnehmen, beseitigen und eintragen, wobei jeder Knoten auf der Schleife einen Vorläufer und einen Nachfolger hat und in der Lage ist, einen Störungszustand seines Nachfolgers oder Vorgängers zu erfassen, **dadurch gekennzeichnet**, dass jeder Knoten vor dem Eintragen von neuen zu verbreitenden Daten in dem Zug zunächst Daten des Zuges, den er soeben empfangen hat, einschließlich des Wertes eines Zählers am Kopf des Zuges in einem internen Speicher aufzeichnet, den Wert dieses Zählers in seinem internen Speicher inkrementiert und den die neuen zu verbreitenden Daten enthaltenden Zug mit dem inkrementierten Wert des Zählers am Kopf wieder auf das Netz gibt, und wenn ein Knoten einen Störungszustand seines Vorgängers auf der Schleife erfasst (53), eine Prozedur des Suchens (59) eines neuen Vorgängers auf der Schleife und des Etablierens einer neuen Schleife für den Zug unternimmt und vor dem Aufzeichnen der Daten des soeben von seinem neuen Vorgänger empfangenen Zuges im internen Speicher den Wert des Zählers am Kopf des empfangenen Zuges mit dem Wert des gleichen Zählers vergleicht (52), der in dem internen Speicher aufgezeichnet ist, und den Zug, der die neuen Daten enthält, auf das Netz gibt, wenn der Wert des Zählers am Kopf des empfangenen Zuges größer als der Wert des Zählers ist, der im Speicher aufgezeichnet ist, oder, im Falle eines entgegengesetzten Vergleichsergebnisses, den Empfang eines anderen Datenzuges abwartet (51).

2. Verfahren nach Anspruch 1, bei dem, wenn ein bestimmter Knoten einen Störungszustand seines Vorgängers erfasst (53) und der Nachfolger des gestörten Knotens eine neue Schleife des Zuges etabliert hat, der Vorgänger des gestörten Knoten auf das Netz einen Zug mit den Daten und dem Wert des Zählers gibt, die er im internen Speicher aufgezeichnet hat.

## Claims

1. A method of transmitting data for a set of data processing nodes (A, B, C) that are interconnected by a communications network (10) and for the purpose of broadcasting data (A1; B1; C1; A'1) from each node to the other nodes by causing a train (120) of such data to travel over the network around a looped circuit or "ring" that passes through said data processing nodes in succession in such a manner that each node in turn recovers, removes, and writes data in the train, each node having a predecessor and a successor on the ring and being capable of detecting a faulty state of its successor or of its predecessor, the method being characterized in that prior to writing new data to be broadcast in the train, each node begins by storing in its internal memory the data of the train that it has just received, including the value of a train header counter, it increments the value of this counter in its internal memory, and it dispatches the train back over the network containing new data to be broadcast and with an incremented value in the header counter, and when a node detects (53) that its predecessor on the ring is in a faulty state, it undertakes a procedure of searching (59) for a new predecessor on the ring and of establishing a new ring for the train, and before proceeding to store in its internal memory the data of the train that it has just received from its new predecessor, it compares (52) the value of the counter in the header of the received train with the value of the same counter as stored in its own internal memory, and it dispatches (56, 57) over the network the train containing said new data if the value of the counter in the header of the received train is greater than the value of the counter as stored in its own memory, otherwise, if the comparison gives the opposite result it waits (51) to receive another data train.

2. The method according to claim 1, in which whenever a particular node has detected (53) that its predecessor is in a faulty state and has established a new ring for the train to travel, the predecessor of the faulty node dispatches (55) over the network a train having the data and the counter value as stored in its internal memory.
